# EUROPÄISCHE PATENTSCHRIFT

(11) **EP 1 452 371 B1**
(45) Veröffentlichungstag und Bekanntmachung des Hinweises auf die Patenterteilung: **28.12.2005**
(21) Anmeldenummer: 04004223.6
(22) Anmeldetag: 25.02.2004
(51) Int. Cl.: B60J 7/22

(54) **Windabweiser für ein Fahrzeugdach**
Wind deflector for vehicle roof
Déflecteur de vent pour toit de véhicule

(30) Priorität: 27.02.2003 DE 10308583
(43) Veröffentlichungstag der Anmeldung: 01.09.2004
(73) Patentinhaber: ArvinMeritor GmbH, 63128 Dietzenbach (DE)
(72) Erfinder: Grimm, Rainer, 60599 Frankfurt/Main (DE); Becher, Thomas, 63110 Rodgau (DE); Böhm, Horst, 60599 Frankfurt/Main (DE)
(74) Vertreter: Sties, Jochen

(56) Entgegenhaltungen:
- EP-A- 0 744 311
- EP-A- 1 342 600
- DE-A- 10 130 405
- DE-U- 29 515 190

## Beschreibung

Die Erfindung betrifft einen Windabweiser für ein Fahrzeugdach, wie er in Verbindung mit einem Schiebe- oder Faltdachsystem verwendet wird.

Der Windabweiser hat die Funktion, die Strömungsverhältnisse dann zu verbessern, wenn der Deckel des Schiebedachsystems sich in einer geöffneten Stellung befindet. Der Windabweiser ist üblicherweise an dem in Fahrtrichtung gesehen vorderen Rand der vom Deckel freigegebenen Dachöffnung angeordnet und wird aus einer abgesenkten Stellung, in der er sich unterhalb der Außenfläche des Fahrzeugdaches befindet, in eine ausgestellte Stellung überführt, wenn der Deckel geöffnet wird.

Wie in EP 0 744 311 gezeigt wird, der Windabweiser kann als Abweiserelement ein flexibles Netz oder Gewebe verwenden, das zwischen zwei Halteelementen angeordnet ist. Ein erstes der Halteelemente ist fest am Fahrzeugdach angebracht, und das zweite kann zwischen einer abgesenkten und einer ausgestellten Stellung bewegt werden. Wenn sich das zweite Halteelement in seiner abgesenkten Stellung befindet, kann das Abweiserelement, da es flexibel ist, platzsparend zusammengelegt werden. Somit ergibt sich insbesondere hinsichtlich der Bauhöhe eine kompakte Baugruppe.

Nachteilig bei einem flexiblen Abweiserelement ist jedoch, daß es sich nicht von alleine kontrolliert zusammenlegt. Daher muß entweder ein vergleichsweise großer Raum zur Verfügung gestellt werden, innerhalb welchem sich das Abweiserelement, wenn das zweite Halteelement in die abgesenkten Stellung überführt wird, frei anordnen kann, ohne daß es mit anderen Bauteilen des Schiebedachsystems in Konflikt kommt. Oder es muß, wenn ein solch großer Raum nicht zur Verfügung steht, auf andere Weise sichergestellt werden, daß das Abweiserelement nicht mit anderen Bauteilen kollidiert, wenn das zweite Halteelement in die abgesenkte Stellung überführt wird.

Zu diesem Zweck schafft die Erfindung einen Windabweiser für ein Fahrzeugdach, mit einem ersten Halteelement, das dafür vorgesehen ist, an dem Fahrzeugdach angebracht zu werden, einem zweiten Halteelement, das zwischen einer abgesenkten und einer ausgestellten Stellung verstellbar ist, einem flexiblen Abweiserelement, das an den beiden Halteelementen befestigt ist, und mindestens einem flexiblen Positionierungselement, welches das Abweiserelement in eine vorbestimmte Richtung drückt, wenn das zweite Halteelement aus der ausgestellten in die abgesenkte Stellung verstellt wird. Das Positionierungselement, das vorzugsweise eine elastisch verformbare Lippe ist, die einstückig mit einem an Abweiserelement vorgesehenen Keder ausgebildet ist, drückt das Abweiserelement, wenn es sich zu entspannen beginnt, aufgrund seiner Eigenelastizität in eine vorbestimmte Richtung, in der sich das Abweiserelement dann frei zusammenlegen kann.

Vorteilhafte Ausführungsformen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer Draufsicht ein Fahrzeugdach mit einem Schiebedachsystem, wobei sich der Deckel des Schiebedachsystems in der geöffneten Stellung befindet;
- Figur 2 in einer perspektivischen Ansicht in der Richtung des Pfeils II von Figur 1 den Windabweiser, der beim Schiebedachsystem verwendet wird;
- Figur 3 einen schematischen Schnitt entlang der Ebene III-III von Figur 1; und
- Figur 4 in einer Ansicht entsprechend derjenigen von Figur 3 den Windabweiser, wobei sich der Deckel in der geschlossenen Stellung befindet.

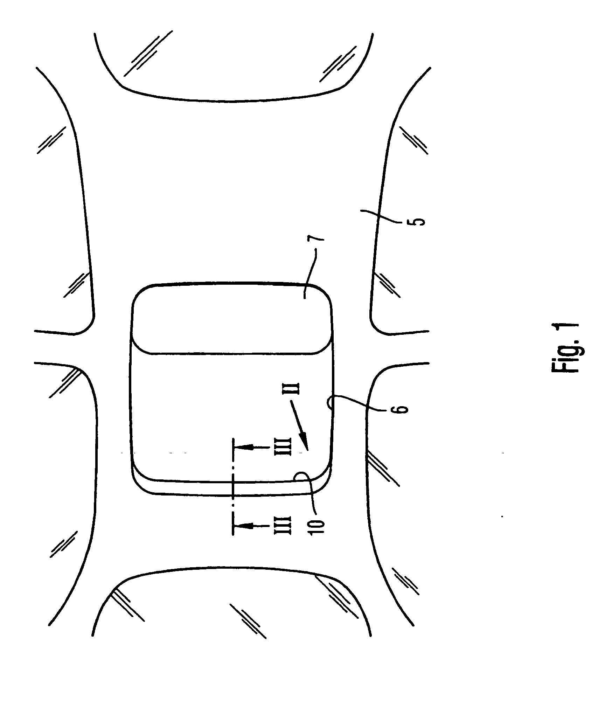

In Figur 1 ist ein Fahrzeugdach 5 gezeigt, das ein Schiebedachsystem mit einer Dachöffnung 6 und einem Deckel 7 aufweist. Der Deckel 7 kann aus einer geschlossenen Stellung, in der er die Dachöffnung 6 verschließt, in eine geöffnete Stellung verschoben werden, die in Figur 1 gezeigt ist und in der die Dachöffnung größtenteils freigegeben ist.

Am bezüglich des Fahrzeugs vorderen Rand der Dachöffnung 6 ist ein Windabweiser 10 angebracht, der in bekannter Weise nach außen ausgestellt werden kann, wenn sich der Deckel 7 in seiner geöffneten Stellung befindet.

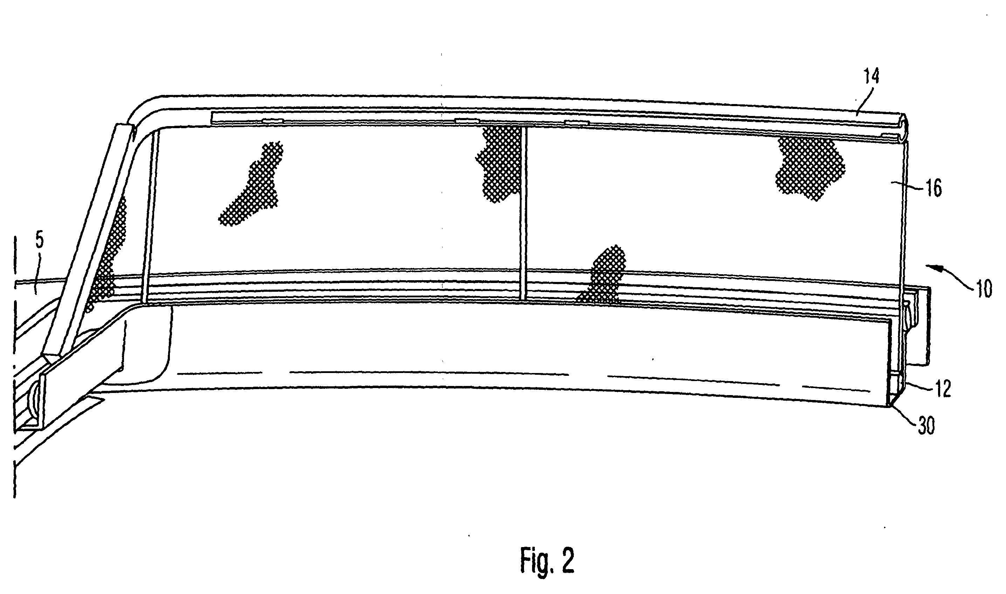

Der Windabweiser 10 besteht aus einem ersten Halteelement 12 (siehe Figur 2), das fest am Fahrzeug bzw. einem Schiebedachrahmen 30 angebracht ist, einem zweiten Halteelement 14, das relativ zum ersten Halteelement verschwenkbar ist, und zwar zwischen einer ersten, abgesenkten Stellung, in der es sich unterhalb des Außenhaut des Fahrzeugdaches 5 befindet, so daß der Deckel 7 geschlossen werden kann, und einer zweiten, nach außen ausgestellten Stellung, die in Figur 2 gezeigt ist. In dieser Stellung steht das zweite Halteelement nach außen über die Außenhaut des Fahrzeugdaches 5 hervor.

Die Art und Weise der Anlenkung des zweiten Halteelements am Fahrzeugdach sowie der Mechanismus zum Verschwenken des zweiten Halteelements zwischen der ausgestellten und der abgesenkten Stellung ist für das Verständnis der Erfindung nicht relevant, so daß hierauf nicht weiter eingegangen wird. Relevant ist allein, daß ein Mechanismus vorgesehen ist, mittels dem das zweite Halteelement 14 aus der ausgestellten Stellung in die abgesenkte Stellung überführt werden kann, wenn der Deckel 7 geschlossen wird.

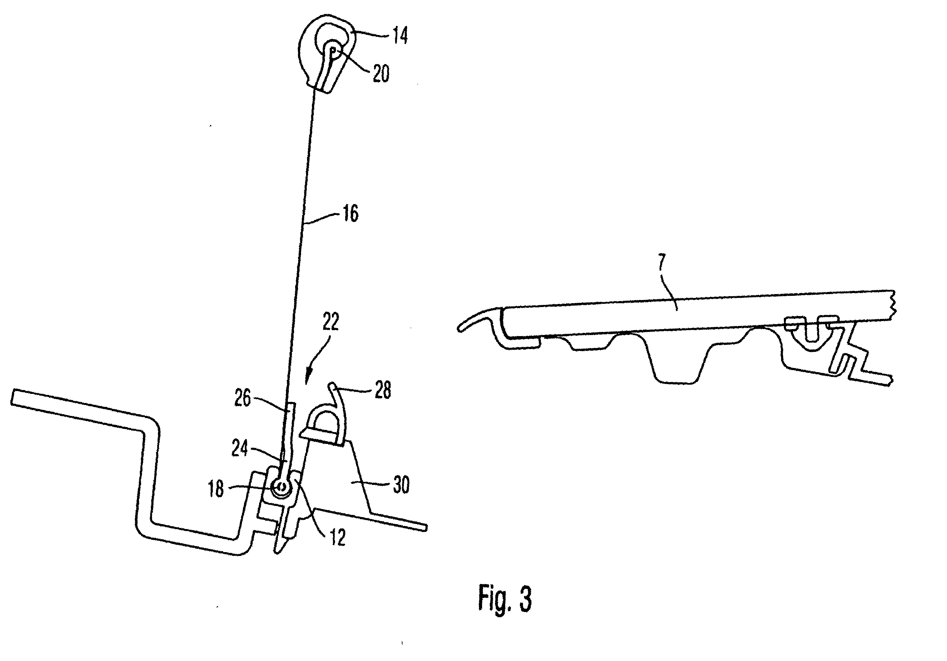

Zwischen dem ersten Halteelement 12 und dem zweiten Halteelement 14 ist ein flexibles Abweiserelement 16 angeordnet, das als Netz oder Gewebeteil ausgeführt ist. Das Abweiserelement 16 ist an seinen Rändern, die den Halteelementen 12, 14 zugeordnet sind, mit einem ersten Keder 18 und einem zweiten Keder 20 versehen (siehe Figur 3). Die beiden Keder 18, 20 bestehen aus Kunststoff und sind an dem Abweiserelement 16 befestigt. Der erste Keder 18 ist im ersten Halteelement 12 aufgenommen, und der zweite Keder 20 ist im zweiten Halteelement 14 aufgenommen. Wenn sich das zweite Halteelement 14 in seiner ausgestellten Position befindet, wird das Abweiserelement zwischen den beiden Halteelementen straff gespannt gehalten, wie dies in Figur 3 dargestellt ist.

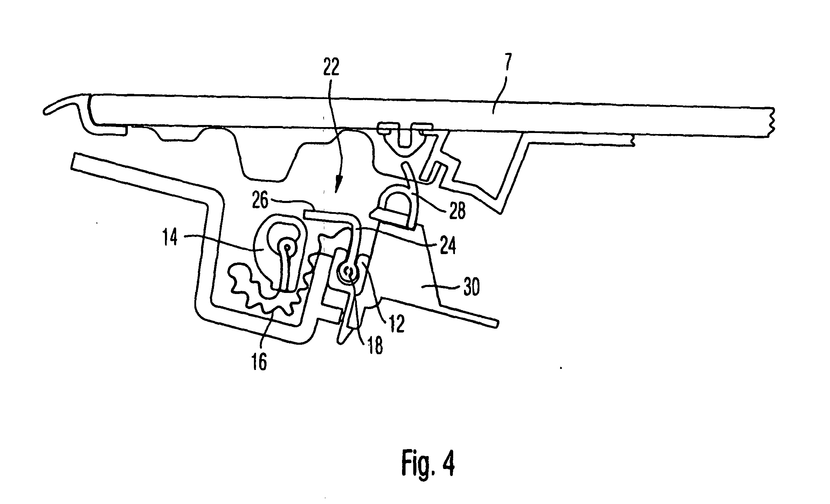

Einstückig mit dem ersten Keder 18 ist ein Positionierungselement 22 ausgebildet, das hier als flexible, elastisch verformbare Lippe ausgebildet ist. Das Positionierungselement 22 weist zwei Schenkel 24, 26 auf, die im Ausgangszustand, also wenn keine äußeren Kräfte einwirken, etwa im rechten Winkel zueinander angeordnet sind (siehe Figur 4), wobei sich der erste Schenkel 24 in der Richtung nach oben erstreckt, in der sich das Abweiserelement 16 erstreckt, wenn es straff gespannt ist, und sich der zweite Schenkel 26 etwa waagerecht nach vorne erstreckt.

Wenn das Abweiserelement 16 straff gespannt ist, ist der zweite Schenkel 26 des Positionierungselementes 22 elastisch um etwa 90° nach oben gebogen, so daß es sich ebenfalls in der Richtung erstreckt, in der sich das Abweiserelement im straff gespannten Zustand erstreckt (siehe Figur 3).

Sobald das zweite Halteelement 14 nach unten in Richtung zu seiner abgesenkten Position verstellt wird, läßt die Spannung im Abweiserelement 16 nach. Dadurch kann sich der zweite Schenkel 26 des Positionierungselementes 22 wieder elastisch in seiner Ausgangsposition zurückstellen, also um 90° entgegen dem Uhrzeigersinn schwenken. Dabei wird dem Abweiserelement 16 eine Richtung vorgegeben, in der dieses sich zusammenlegt, und zwar bezüglich den Figuren 3 und 4 in einem Raum links des ersten Halteelementes 12. Dies gewährleistet, daß sich das Abweiserelement 16 nicht über eine Dichtung 28 legt, die in der Nähe des Windabweisers 10 angeordnet ist.

## Patentansprüche

1. Windabweiser (10) für ein Fahrzeugdach, mit einem ersten Halteelement (12), das dafür vorgesehen ist, an dem Fahrzeugdach angebracht zu werden, einem zweiten Halteelement (14), das zwischen einer abgesenkten und einer ausgestellten Stellung verstellbar ist, einem flexiblen Abweiserelement (16), das an den beiden Halteelementen (12, 14) befestigt ist, **dadurch gekennzeichnet, dass** mindestens ein flexibles Positionierungselement (22) vorgesehen ist, welches das Abweiserelement (16) in eine vorbestimmte Richtung drückt, wenn das zweite Halteelement (14) aus der ausgestellten in die abgesenkte Stellung verstellt wird.

2. Windabweiser nach Anspruch 1, **dadurch gekennzeichnet, daß** das Positionierungselement (22) eine elastisch verformbare Lippe ist.

3. Windabweiser nach einem der Ansprüche 1 und 2, **dadurch gekennzeichnet, daß** das Positionierungselement (22) an dem Halteelement (12) angebracht ist.

4. Windabweiser nach einem der vorhergehenden Ansprüche, **dadurch gekennzeichnet, daß** das Abweiserelement (16) mit einem Keder (18) versehen ist, an dem das Positionierungselement (22) angebracht ist.

5. Windabweiser nach Anspruch 4, **dadurch gekennzeichnet, daß** das Positionierungselement (22) einstückig mit dem Keder (18) ausgebildet ist.

6. Windabweiser nach einem der vorhergehenden Ansprüche, **dadurch gekennzeichnet, daß** das Abweiserelement (16) ein Netz ist.

## Claims

1. A wind deflector (10) for a vehicle roof, comprising a first holding element (12) which is designed to be attached to the vehicle roof, a second holding element (14) which can be moved between a lowered and a raised position, a flexible deflector element (16) which is secured to the two holding elements (12, 14), **characterized in that** at least one flexible positioning element (22) is provided, which pushes the deflector element (16) in a predetermined direction when the second holding element (14) is moved from the raised position to the lowered position.

2. The wind deflector according to claim 1, **characterized in that** the positioning element (22) is an elastically deformable lip.

3. The wind deflector according to one of claims 1 and 2, **characterized in that** the positioning element (22) is attached to the holding element (12).

4. The wind deflector according to any of the preceding claims, **characterized in that** the deflector element (16) is provided with a strip type retainer (18) to which the positioning element (22) is attached.

5. The wind deflector according to Claim 4, **characterized in that** the positioning element (22) is formed in one piece with the strip type retainer (18).

6. The wind deflector according to any of the preceding claims, **characterized in that** the deflector element (16) is a net.

## Revendications

1. Déflecteur de vent (10) pour un toit de véhicule, comportant un premier élément de retenue (12) qui est prévu pour être monté sur le toit du véhicule, un deuxième élément de retenue (14) qui est déplaçable entre une position abaissée et une position relevée, un élément déflecteur (16) qui est fixé sur les deux éléments de retenue (12, 14), **caractérisé en ce qu'**il est prévu au moins un élément de positionnement (22) flexible, qui presse l'élément déflecteur (16) dans une direction prédéterminée lorsque le deuxième élément de retenue (14) est déplacé depuis la position relevée jusque dans la position abaissée.

2. Déflecteur de vent selon la revendication 1, **caractérisé en ce que** l'élément de positionnement (22) est une lèvre élastiquement déformable.

3. Déflecteur de vent selon l'une des revendications 1 et 2, **caractérisé en ce que** l'élément de positionnement (22) est monté sur l'élément de retenue (12).

4. Déflecteur de vent selon l'une des revendications précédentes, **caractérisé en ce que** l'élément déflecteur (16) est pourvu d'un bourrelet (18) sur lequel est monté l'élément de positionnement (22).

5. Déflecteur de vent selon la revendication 4, **caractérisé en ce que** l'élément de positionnement (22) est réalisé d'un seul tenant avec le bourrelet (18).

6. Déflecteur de vent selon l'une des revendications précédentes, **caractérisé en ce que** l'élément déflecteur (16) est un filet.
